# EUROPEAN PATENT SPECIFICATION

(11) **EP 1 255 893 B1**
(45) Date of publication and mention of the grant of the patent: **03.03.2004**
(21) Application number: 99967717.2
(22) Date of filing: 29.12.1999
(51) Int. Cl.: D21H 21/30, C09K 11/00, D21H 21/14, C09B 67/14

(54) **FLUORESCENT AGENTS**
FLUORESZIERENDE MITTEL
AGENTS FLUORESCENTS

(43) Date of publication of application: 13.11.2002
(73) Proprietor: MINERALS TECHNOLOGIES INC., Bethlehem, PA 18017 (US)
(72) Inventor: SAULSBERY, Robin, L., Allentown, PA 18102 (US); SLOZER, Matthew, Frederick, Emmaus, PA 18049 (US)
(74) Representative: Bawden, Peter Charles
(86) International application number: PCT/US1999/031137
(87) International publication number: WO 2001/049934

(56) References cited:
- EP-A- 0 463 260
- US-A- 3 915 884
- US-A- 4 975 220
- US-A- 5 714 310
- DATABASE WPI Section Ch, Week 198848 Derwent Publications Ltd., London, GB; Class A89, AN 1988-342880 XP002136291 & JP 63 256484 A (NIPPON KAYAKU KK), 24 October 1988 (1988-10-24)
- DATABASE WPI Section Ch, Week 199425 Derwent Publications Ltd., London, GB; Class A97, AN 1994-206751 XP002136292 & JP 06 145582 A (BUNCHO KK), 24 May 1994 (1994-05-24)
- DATABASE WPI Section Ch, Week 199318 Derwent Publications Ltd., London, GB; Class A82, AN 1993-149423 XP002136293 & JP 05 086362 A (SHINROIHI KK), 6 April 1993 (1993-04-06)
- DATABASE WPI Section Ch, Week 197818 Derwent Publications Ltd., London, GB; Class E13, AN 1978-33375A XP002136296 & SU 558 914 A (KRASOVITSKII B M), 5 August 1977 (1977-08-05)
- DATABASE WPI Section Ch, Week 198148 Derwent Publications Ltd., London, GB; Class A97, AN 1981-88400D XP002136295 & JP 56 134293 A (SUMITOMO CHEM CO LTD), 20 October 1981 (1981-10-20)

## Description

This invention relates to fluorescent pigments useful in paper, paint, plastic, resin, and polymers. This invention also relates to methods of preparing the pigments, to paper, paint, plastic, resin, and polymers containing the pigments.

Fluorescent materials are usually large non-saturated aromatic molecules such as stilbene, or inorganic solids consisting of a metal cation, a nonmetal cation, a nonmetal anion, and an activator of some type. Activators are usually rare earth or transition metals which, when added to these compounds in small amounts, e.g., 0.1 percent to 5 percent, can alter wavelength of the emitted light.

Organic based fluorescent compounds are called "optical brightening agents" (OBA) or "fluorescent whitening agents" (FWA), and are typically added in with filler and/or comprise part of the coating formulation in finer grades of paper, and as filler pigments in paints, polymers, plastics, resins. Such FWA and OBA's fluoresce at around 450 nm or in the blue violet region of the electromagnetic spectrum, and their use counteracts the natural yellow coloration of cellulose fibers, plastics, and paint bases so as to cause the treated substance to appear whiter and brighter.

FWA's used in papermaking also require quenching during white water recycling in order to maintain even fluorescence on the paper, which adds cost to the process. Furthermore, food grade papers can not be made on paper machines where FWA's have been previously used, unless the machine is thoroughly cleaned, which causes expense, downtime, and other problems.

Therefore, in the paper field, as well as in the fields of plastics, resins, polymers, and paint, there is a need for fluorescent pigments which can be used as fillers and coating materials.

In US-A-4975220 it is not the reaction product of the metal oxide, organic acid and carbohydrate that is the fluorescent pigment. Rather in US-A-4975220 a fluorescent dye is used and the other materials (being the essential components of our invention) are optional ingredients.

Similarly in US -A-3915884 it is not the mineral filler that is rendered fluorescent by the carbohydrate and the carboxylic acid. Rather these materials are used as optional ingredients in a system where the fluorescence is provided by a conventional dyestuff.

In the Abstract of Japanese application JPA-66145582 the alkali metal salt of a 8-36 carbon aliphatic carboxylic acid is mixed with starch or modified starch. However a separate fluorescent dye or pigment is included.

### SUMMARY OF THE INVENTION

These needs, and others which will become apparent from the following disclosure, are addressed by the present invention which comprises in one aspect a composition comprising a fluorescent pigment comprising the reaction product of one or more metal compound(s) selected from metal oxides and metal hydroxides; one or more carbohydrate compound(s) such as sugars and starches; and one or more organic acids.

In another aspect, the invention comprises paper filled or coated with the fluorescent pigment. The invention also comprises polymer, paint, resin, plastic, or other material comprising the fluorescent material.

In still another aspect, the invention comprises a method of preparing the fluorescent pigment composition comprising reacting the metal compound(s); the carbohydrate compound(s); and organic acid(s) in water, and drying so as to form a particulate material.

### DETAILED DESCRIPTION OF THE INVENTION AND THE PREFERRED EMBODIMENTS

The fluorescent material of the invention, sometimes referred to herein as an FWA, can be used in all paper products, paperboard products or aseptic packaging. The fluorescent material can also be used in any composition or product where fluorescence is desirable, especially in polymers, plastics, resins paints, coatings and the like. The material can be added in the same manner as other pigments would be added to such compositions or products.

The fluorescent mineral agents are whitening agents or pigments which can be prepared, for. example, by mixing the carbohydrate(s), the metal compound(s), the organic acid(s), and water and then drying to remove the water. For the purpose of this invention, fluorescent whitening agents are chemicals which absorb light in the ultraviolet region and reemit it in the visible blue range giving a fluorescent whitening effect. The composition of the FWA's is the reaction product obtained by mixing preferably from about 1 percent to 67 percent carbohydrate(s), from about 11 percent to 67 percent metal compound(s), and from about 11 percent to 67 percent organic acid(s). All percentages herein are dry weight percentages.

When the carbohydrate is one or more forms of sugar, the sugar(s) can be first dissolved in warm water at a concentration of from about 2.5 percent to about 8 percent by weight of solution of sugar and water. Sucrose is the preferred form of sugar, but other forms can be used instead or in combination with the sucrose. The preferred, more preferred, and most preferred ratio ranges of sugar(s) to metal compound(s) to organic acid(s) are from about 30 percent to about 67 percent, more preferably from about 40 percent to about 60 percent, and most preferably about 50 percent sugar(s); from about 15 percent to about 35 percent, more preferably from about 20 percent to about 30 percent, and most preferably about 25 percent of metal compound(s), and from about 10 percent to about 35 percent, more preferably from about 20 percent to about 30 percent, and most preferably about 25 percent of organic acid(s).

When the carbohydrate is one or more forms of starch, the starch is cooked, preferably at a concentration of from about 1 percent to 1.5 percent by weight, followed by mixing with the other ingredients. The preferred, more preferred, and most preferred ratios of starch(es) to metal compound(s) to organic acid(s) are from about 3 percent to about 20 percent, more preferably from about 3 percent to about 10 percent, and most preferably about 4 percent starch(es); from about 30 percent to about 60 percent, more preferably from about 40 percent to about 55 percent, and most preferably about 48 percent of metal compound(s); and from about 30 percent to about 60 percent, more preferably from about 40 percent to about 55 percent, and most preferably about 48 percent of organic acid(s). Non-limiting examples of preferred starches are cationic corn starch, ethylated starch, potato starch, amphoteric starch, modified starch and the like.

The metal compound is preferably a metal oxide or metal hydroxide. The metal ion of the metal oxide or hydroxide can be zinc, magnesium, calcium, sodium, potassium, and the like. Zinc oxide is preferred. Other non-limiting examples of these compounds include, magnesium hydroxide, calcium oxide, sodium hydroxide, and potassium hydroxide. The metal oxide or hydroxide is usually added before the organic acid.

The organic acid is preferably aromatic, non-limiting examples are salicylic, phthalic, isophthalic, terephthalic acids, and the like. The most preferred aromatic acid is salicylic acid.

The fluorescent material is preferably removed from solution by drying.

The fluorescent material is very useful as a whitening agent. Addition to paint, plastics, or resin as a filler or pigment or coating, and especially to paper as a filler or coating results in improvements to such materials with respect to whitening and usability in food contact applications. The fluorescence wavelength of the materials varies, but is preferably in the range of from about 400 nanometers (nm) to about 470nm range, more preferably in the range of from about 430nm to about 440nm range, which is most suitable for compensating for the natural yellowness of paper and other materials.

When used in paper, the fluorescent material can be added or applied to paper in the same manner as other fillers and coatings. The fluorescent material imparts brightness to the paper sheets while reducing the need for conventional paper mineral filler and coatings. The fluorescent material can be added instead of, or in combination with, conventional fillers such as precipitated calcium carbonate (PCC), ground calcium carbonate (GCC), clay, and the like.

When used in paints, plastics, and resins, the material is added in the same manner as conventional fillers or pigments, but the material of the invention causes fluorescence and increases the brightness and reflectance of the resulting paint, polymer, plastic, or resin. The fluorescent material can be added instead of, or in combination with, conventional fillers such as PCC, GCC, clay, and the like.

### EXAMPLES

The following non-limiting examples are presented to illustrate a few embodiments of the invention. All parts and percentages are by dry weight unless otherwise noted.

### EXAMPLE 1

Sucrose, zinc oxide, and salicylic acid were added in order to a small amount of warm deionized water, stirred for about five minutes, and then poured onto a watch glass, followed by oven drying at 110 degrees Celsius. The dry samples were measured for fluorescence using a Hitachi F-450 fluorescence spectrophotometer by placing a sample in a sample holder and obtaining a contour plot of excitation wavelength versus emission wavelength, and then using the graph to determine the peak excitation wavelength for obtaining intensity vs. emission wavelength spectra. The wavelength of the maximum emission is reported in Table 1.

**TABLE 1**

| Sucrose (parts) | Zinc oxide (parts) | Salicylic acid (parts) | Peak Emission Wavelength, (nm) |
|---|---|---|---|
| 6 | 2 | 1 | 438 |
| 2 | 2 | 1 | 434 |
| 3 | 2 | 1 | 425 |
| 3.6 | 2 | 1 | 430 |
| 2:6 | 2 | 1 | 432 |
| 4 | 4 | 1 | 412 |
| 4 | 1 | 1 | 411 |
| 2 | 1 | 1 | 432 |
| 4 | 2 | 1 | 436 |
| 8 | 4 | 1 | 385 |
| 5 | 2.5 | 1 | 429 |
| 2.5 | 1.25 | 1 | 434 |

Altering the ratio of sugar/metal oxide/and organic acid changes the peak emission wave length and therefore the fluorescence of the material.

### EXAMPLE 2

This fluorescent material was added either alone or in combination with PCC to paper pulp. The pulp was bleached northern kraft, co-refined at 1.6 percent consistency to an endpoint of 400 Canadian Standard Freeness. Alkyl Ketene Dimer sizing (Hercon® 75 AKD, Hercules Inc.) and anionic polyacrylamide retention aid (Reten® 1523 Hercules Inc:) were added to the furnish at rates of 0.25 percent and 0.0125 percent, respectively. Aliquots were taken from each batch to form four 75 grams per meter squared (g/m²) conditioned handsheets. The handsheets were formed, pressed at 1.38 bar (20 pounds per square inch (psi)), and dried on a Formax sheet former, and then measured for fluorescence using the spectrophotometer and method described in Example 1, with the results shown in Table 2.

**TABLE 2**

| Filler | Peak Emission Wavelength, (nm) | Peak Emission Intensity |
|---|---|---|
| None (control) | 416 | 309 |
| FWA, 10% (invention) | 415 | 1974 |
| 10% FWA, 10% PCC (invention) | 415 | 2308 |
| PCC | 469 | 284 |

Handsheets containing FWA display increased fluorescence compared to non-FWA containing sheets.

## Claims

1. Composition comprising a fluorescent pigment comprising the reaction product of one or more metal compound(s) selected from the group consisting of metal oxide and metal hydroxide; one or more carbohydrate(s) selected from the group consisting of sugar and starch; and one or more organic acid(s).

2. Composition according to claim 1 wherein the metal compound(s) are selected from the group consisting of zinc oxide, magnesium oxide, calcium oxide, sodium hydroxide, and potassium hydroxide.

3. Composition according to claim 1 wherein the carbohydrate(s) are selected from the group consisting of sugar, corn starch, potato starch, amphoteric starch, ethylated starch, and modified starches.

4. Composition according to claim 1 wherein the organic acid is an unsaturated acid or aromatic acid.

5. Composition according to claim 4 wherein the aromatic acid is selected from the group consisting of salicylic acid, phthalic acid, isophthalic acid, and terephthalic acid.

6. Composition according to claim 1 wherein the organic acid is salicylic acid, the metal compound is zinc oxide, and the carbohydrate(s) are selected from the group consisting of sugar and starch.

7. Composition according to claim 1 wherein the pigment is a reaction product of from about 11 percent to about 67 percent by weight metal compound(s); from about 1 percent to about 67 percent by weight carbohydrate(s); and from about 11 percent to about 67 percent by weight organic acid(s).

8. Composition according to claim 1 wherein the pigment is a reaction product of from about 30 percent to about 60 percent by weight metal compound(s); from about 3 percent to about 20 percent by weight starch(es); and from about 30 percent to about 60 percent by weight organic acid(s).

9. Composition according to claim 1 wherein the pigment is a reaction product of from about 15 percent to about 35 percent by weight metal compound(s); from about 30 percent to about 67 percent by weight sugar(s); and from about 10 percent to about 35 percent by weight organic acid(s).

10. Composition according to claim 1 wherein the pigment is a reaction product of from about 40 percent to about 55 percent by weight metal compound(s); from about 3 percent to about 10 percent by weight starch(es); and from about 40 percent to about 55 percent by weight organic acid(s).

11. Composition according to claim 1 wherein the pigment is a reaction product of from about 20 percent to about 30 percent by weight metal compound(s); from about 40 percent to about 60 percent by weight sugar(s); and from about 20 percent to about 30 percent by weight organic acid(s).

12. Composition according to claim 1 wherein the pigment is a reaction product of about 48 percent by weight metal compound(s); about 4 percent by weight starch(es); and about 48 percent by weight organic acid(s).

13. Composition according to claim 1 wherein the pigment is a reaction product of about 25 percent by weight metal compound(s); about 50 percent by weight sugar(s); and about 25 percent by weight organic acid(s).

14. Composition according to claim 1 wherein the pigment is a reaction product of sucrose, salicylic acid, and zinc oxide.

15. Composition according to claim 1 wherein the pigment is a reaction product of starch, salicylic acid, and zinc oxide.

16. Composition comprising paper filled or coated with the fluorescent pigment of claim 1.

17. Composition comprising paint, plastic, or resin filled or coated with the fluorescent pigment of claim 1.

18. Composition comprising polymer extended with fluorescent pigment according to claim 1.

19. Paper comprising a filler or coating having a composition according to claim 1.

20. Polymer, resin, paint, or plastic comprising a pigment and/or filler having a composition according to claim 1.

21. Method of preparing a fluorescent pigment composition comprising reacting one or more metal salts selected from the group consisting of metal oxides and metal hydroxides; one or more carbohydrate(s) selected from the group consisting of sugar and starch; and one or more organic acid(s) in the presence of water, and drying so as to form a particulate material.

## Patentansprüche

1. Mischung umfassend ein fluoriszierendes Pigment, umfassend das Reaktionsprodukt einer oder mehrerer Metallverbindung(en), ausgewählt aus der Gruppe bestehend aus Metalloxiden und Metallhydroxiden; ein oder mehrere Kohlenhydrat(e) ausgewählt aus der Gruppe bestehend aus Zucker und Stärke; und eine oder mehrere organische Säure(n) umfasst.

2. Mischung nach Anspruch 1, wobei die Metallverbindung(en) aus der Gruppe bestehend aus Zinkoxid, Magnesiumoxid, Kalziumoxid, Natriumhydroxid und Kaliumhydroxid ausgewählt sind.

3. Mischung nach Anspruch 1, wobei das/die Kohlenhydrat(e) aus der Gruppe bestehend aus Zucker, Maisstärke, Kartoffelstärke, amphoterer Stärke, ethylierter Stärke und modifizierter Stärke ausgewählt ist/sind.

4. Mischung nach Anspruch 1, wobei die organische Säure eine ungesättigte Säure oder eine aromatische Säure ist.

5. Mischung nach Anspruch 4, wobei die aromatische Säure aus der Gruppe bestehend aus Salicylsäure, Phthalsäure, Isophthalsäure und Terephthalsäure ausgewählt ist.

6. Mischung nach Anspruch 1,wobei die organische Säure Salicylsäure, die Metallverbindung Zinkoxid ist und das/die Kohlenhydrat(e) aus der Gruppe bestehend aus Zucker und Stärke ausgewählt ist/sind.

7. Mischung nach Anspruch 1,wobei das Pigment ein Reaktionsprodukt ist aus ungefähr 11 Gewichtsprozent bis ungefähr 67 Gewichtsprozent Metallverbindung(en); ungefähr 1 Gewichtsprozent bis ungefähr 67 Gewichtsprozent Kohlenhydrat(e); und ungefähr 11 Gewichtsprozent bis ungefähr 67 Gewichtsprozent organische Säure(n).

8. Mischung nach Anspruch 1,wobei das Pigment ein Reaktionsprodukt ist aus ungefähr 30 Gewichtsprozent bis ungefähr 60 Gewichtsprozent Metallverbindung(en); ungefähr 3 Gewichtsprozent bis ungefähr 20 Gewichtsprozent Stärke(n); und ungefähr 30 Gewichtsprozent bis ungefähr 60 Gewichtsprozent organische Säure(n).

9. Mischung nach Anspruch 1,wobei das Pigment ein Reaktionsprodukt ist aus ungefähr 15 Gewichtsprozent bis ungefähr 35 Gewichtsprozent Metallverbindung(en); ungefähr 30 Gewichtsprozent bis ungefähr 67 Gewichtsprozent Zukker; und ungefähr 10 Gewichtsprozent bis ungefähr 35 Gewichtsprozent organische Säure(n).

10. Mischung nach Anspruch 1,wobei das Pigment ein Reaktionsprodukt ist aus ungefähr 40 Gewichtsprozent bis ungefähr 55 Gewichtsprozent Metallverbindung(en); ungefähr 3 Gewichtsprozent bis ungefähr 10 Gewichtsprozent Stärke(n); und ungefähr 40 Gewichtsprozent bis ungefähr 55 Gewichtsprozent organische Säure(n).

11. Mischung nach Anspruch 1,wobei das Pigment ein Reaktionsprodukt ist aus ungefähr 20 Gewichtsprozent bis ungefähr 30 Gewichtsprozent Metallverbindung(en); ungefähr 40 Gewichtsprozent bis ungefähr 60 Gewichtsprozent Zukker; und ungefähr 20 Gewichtsprozent bis ungefähr 30 Gewichtsprozent organische Säure(n).

12. Mischung nach Anspruch 1,wobei das Pigment ein Reaktionsprodukt ist aus ungefähr 48 Gewichtsprozent Metallverbindung(en); ungefähr 4 Gewichtsprozent Stärke(n); und ungefähr 48 Gewichtsprozent organischer Säure(n).

13. Mischung nach Anspruch 1, wobei das Pigment ein Reaktionsprodukt ist aus ungefähr 25 Gewichtsprozent Metallverbindung(en); ungefähr 50 Gewichtsprozent Zucker; und ungefähr 25 Gewichtsprozent organische Säure(n).

14. Mischung nach Anspruch 1,wobei das Pigment ein Reaktionsprodukt aus Saccharose, Salicylsäure und Zinkoxid ist.

15. Mischung nach Anspruch 1,wobei das Pigment ein Reaktionsprodukt aus Stärke, Salicylsäure und Zinkoxid ist.

16. Mischung umfassend ein mit dem fluoriszierenden Pigment von Anspruch 1 gefülltes oder beschichtetes Papier.

17. Mischung umfassend mit dem fluoriszierenden Pigment von Anspruch 1 gefüllte oder beschichtetes Farbe, Kunststoff oder Harz.

18. Mischung umfassend ein mit dem fluoriszierenden Pigment von Anspruch 1 erweitertes Polymer.

19. Papier umfassend einen Füllstoff oder eine Beschichtung mit einer Mischung nach Anspruch 1.

20. Polymer, Harz, Farbe oder Kunststoff umfassend ein Pigment und/oder Füllstoff mit einer Mischung nach Anspruch 1.

21. Verfahren zur Darstellung einer fluoriszierenden Pigmentmischung umfassend eine Reagierenlassen eines oder mehrerer Metallsalz(e), ausgewählt aus der Gruppe bestehend aus Metalloxiden und Metallhydroxiden; eines oder mehrere Kohlenhydrat(e), ausgewählt aus der Gruppe bestehend aus Zucker und Stärke; und einer oder mehrerer organischer Säure(n) in der Gegenwart von Wasser und Trocknen, um so ein partikuläres Material zu formen.

## Revendications

1. Composition comprenant un pigment fluorescent qui comprend le produit de réaction d'un ou de plusieurs composés métalliques choisis dans le groupe consistant en un oxyde métallique et un hydroxyde métallique ; d'un ou de plusieurs glucides choisis dans le groupe consistant en un sucre et un amidon ; et d'un ou de plusieurs acides organiques.

2. Composition suivant la revendication 1, dans laquelle le ou les composés métalliques sont choisis dans le groupe consistant en l'oxyde de zinc, l'oxyde de magnésium, l'oxyde de calcium, l'hydroxyde de sodium et l'hydroxyde de potassium.

3. Composition suivant la revendication 1, dans laquelle le ou les glucides sont choisis dans le groupe consistant en un sucre, l'amidon de mais, la fécule de pomme de terre, un amidon amphotère, un amidon éthylé et des amidons modifiés.

4. Composition suivant la revendication 1, dans laquelle l'acide organique est un acide insaturé ou acide aromatique.

5. Composition suivant la revendication 4, dans laquelle l'acide aromatique est choisi dans le groupe consistant en l'acide salicylique, l'acide phtalique, l'acide isophtalique, et l'acide téréphtalique.

6. Composition suivant la revendication 1, dans laquelle l'acide organique est l'acide salicylique, le composé métallique est l'oxyde de zinc et le ou les glucides sont choisis dans le groupe consistant en un sucre et un amidon.

7. Composition suivant la revendication 1, dans laquelle le pigment est un produit de réaction d'environ 11% à environ 67% en poids d'un ou de plusieurs composés métalliques, d'environ 1% à environ 67% en poids d'un ou de plusieurs glucides et d'environ 11% à environ 67% en poids d'un ou de plusieurs acides organiques.

8. Composition suivant la revendication 1, dans laquelle le pigment est un produit de réaction d'environ 30% à environ 60% en poids d'un ou de plusieurs composés métalliques, d'environ 3% à environ 20% en poids d'un ou de plusieurs amidons et d'environ 30% à environ 60% en poids d'un ou de plusieurs acides organiques.

9. Composition suivant la revendication 1, dans laquelle le pigment est un produit de réaction d'environ 15% à environ 35% en poids d'un ou de plusieurs composés métalliques, d'environ 30% à environ 67% en poids d'un ou de plusieurs sucres et d'environ 10% à environ 35% en poids d'un ou de plusieurs acides organiques.

10. Composition suivant la revendication 1, dans laquelle le pigment est un produit de réaction d'environ 40% à environ 55% en poids d'un ou de plusieurs composés métalliques, d'environ 3% à environ 10% en poids d'un ou de plusieurs amidons et d'environ 40% à environ 55% en poids d'un ou de plusieurs acides organiques.

11. Composition suivant la revendication 1, dans laquelle le pigment est un produit de réaction d'environ 20% à environ 30% en poids d'un ou de plusieurs composés métalliques, d'environ 40% à environ 60% en poids d'un ou de plusieurs sucres et d'environ 20% à environ 30% en poids d'un ou de plusieurs acides organiques.

12. Composition suivant la revendication 1, dans laquelle le pigment est un produit de réaction d'environ 48% en poids d'un ou de plusieurs composés métalliques, d'environ 4% en poids d'un ou de plusieurs amidons et d'environ 48% en poids d'un ou de plusieurs acides organiques.

13. Composition suivant la revendication 1, dans laquelle le pigment est un produit de réaction d'environ 25% en poids d'un ou de plusieurs composés métalliques, d'environ 50% en poids d'un ou de plusieurs sucres et d'environ 25% en poids d'un ou de plusieurs acides organiques.

14. Composition suivant la revendication 1, dans laquelle le pigment est un produit de réaction du saccharose, de l'acide salicylique et de l'oxyde de zinc.

15. Composition suivant la revendication 1, dans laquelle le pigment est un produit de réaction d'un amidon, de l'acide salicylique et de l'oxyde de zinc.

16. Composition comprenant un papier chargé ou revêtu avec le pigment fluorescent suivant la revendication 1.

17. Composition comprenant une peinture, une matière plastique ou une résine chargée avec le pigment fluorescent suivant la revendication 1.

18. Composition comprenant un polymère étendu avec un pigment fluorescent suivant la revendication 1.

19. Papier comprenant une charge ou un revêtement ayant une composition suivant la revendication 1.

20. Polymère, résine, peinture ou matière plastique comprenant un pigment et/ou une charge ayant une composition suivant la revendication 1.

21. Procédé pour la préparation d'une composition de pigment fluorescent, comprenant la réaction d'un ou de plusieurs sels métalliques choisis dans le groupe consistant en des oxydes métalliques et des hydroxydes métalliques ; d'un ou de plusieurs glucides choisis dans le groupe consistant en sucre et en amidon ; et d'un ou de plusieurs acides organiques en présence d'eau, et un séchage de manière à former une matière en particules.
